(19) Europäisches Patentamt
European Patent Office
Office européen des brevets

(11) EP 0 605 588 B1

## (12) EUROPÄISCHE PATENTSCHRIFT

(45) Veröffentlichungstag und Bekanntmachung des Hinweises auf die Patenterteilung:
**05.03.1997 Patentblatt 1997/10**

(21) Anmeldenummer: 92920654.8

(22) Anmeldetag: **25.09.1992**

(51) Int Cl.⁶: **H04N 5/232**

(86) Internationale Anmeldenummer:
**PCT/EP92/02221**

(87) Internationale Veröffentlichungsnummer:
**WO 93/06689 (01.04.1993 Gazette 1993/09)**

(54) **AUFNAHME VON BEWEGTBILDERN MIT BILDSENSOR UND BEWEGUNGSSENSOR MIT ERHöHTER BILDWECHSELFREQUENZ**

MOTION IMAGE PICKING-UP WITH IMAGE SENSOR AND MOTION SENSOR WITH INCREASED FRAME FREQUENCY

ENREGISTREMENT D'IMAGES ANIMEES AVEC UN SENSEUR D'IMAGES ET UN SENSEUR DE MOUVEMENT A FREQUENCE D'IMAGE ELEVEE

(84) Benannte Vertragsstaaten:
**DE FR GB IT**

(30) Priorität: **27.09.1991 DE 4132359**

(43) Veröffentlichungstag der Anmeldung:
**13.07.1994 Patentblatt 1994/28**

(73) Patentinhaber: **Grundig E.M.V.**
**Elektro-Mechanische Versuchsanstalt Max Grundig GmbH & Co. KG**
**90762 Fürth (DE)**

(72) Erfinder:
• **WENDLAND, Broder**
**D-4600 Dortmund 50 (DE)**

• **SCHMITZ, Ulrich**
**D-5272 Wipperfuerth (DE)**
• **HOLLMANN, Thomas**
**D-4600 Dortmund 50 (DE)**

(56) Entgegenhaltungen:
**EP-A- 0 435 319       US-A- 5 041 852**

• **PATENT ABSTRACTS OF JAPAN vol. 8, no. 39 (E-228)(1476) 21. Februar 1984**
• **PATENT ABSTRACTS OF JAPAN vol. 14, no. 557 (E-1011)21. September 1990**

**Beschreibung**

Die Erfindung betrifft ein Verfahren zur Aufnahme von Bewegtbildern für eine nachfolgende, bewegungsinformationsgestützte Signalverarbeitung.

Zur Umsetzung von Bewegtbildern zwischen unterschiedlichen Fernsehnormen und zur Erhöhung der Bildwiedergabefrequenz sowie zur Erzeugung von Zeitlupensequenzen ist eine Zwischenbildinterpolation notwendig. Von wesentlicher Bedeutung ist hierbei die Verwendung von bewegungsinformationsgestützter Signalverarbeitung, um unter Beibehaltung der gegebenen örtlichen Auflösung eine für das menschliche Auge fehlerfreie Bewegungsdarstellung zu erhalten.

Ein Großteil der Änderungen in aufeinanderfolgenden Bildern einer Bildsequenz ist auf Bewegungen der abgebildeten Objekte und/oder der Aufnahmekamera zurückzuführen. Diese Änderungen können lokal als eine Verschiebung der entsprechenden Bildinhalte in Folgebildern beschrieben werden. Mittels einer bewegungsinformationsgestützten Signalverarbeitung bei der Bildinterpolation soll nun erreicht werden, daß der Bildinhalt zu einem gegebenen Zeitpunkt an der richtigen örtlichen Position, welche durch die Objektbewegung festgelegt ist, wiedergegeben wird.

Eine weitere Anwendung von bewegungsinformationsgestützter Signalverarbeitung ist die Rauschreduktion in Bewegtbildsignalen. Erst durch eine zeitliche Filterung in Bewegungsrichtung, die durch Steuerung mittels Bewegungsinformation erreicht werden kann, ist eine effektive Rauschreduktion ohne Reduktion von örtlicher Auflösung in bewegten Bildbereichen möglich.

Auch bei der Übertragung von analogen Bewegtbildsignalen ermöglicht die zusätzliche Übertragung von Bewegungsinformation die Aufrechterhaltung einer erhöhten örtlichen Auflösung bei zeitlich unterabgetastetem Bildsignal bis zu höheren Geschwindigkeiten von Objekt- bzw. Kamerabewegungen. Bei der übertragung von digital codierten Bewegtbildsignalen werden durch die zusätzliche Übertragung von Bewegungsinformationen zur Erzeugung von verbesserten Prädiktionsbildern mittels bewegungsinformationsgestützter Signalverarbeitung insgesamt geringere Datenraten erzielt.

Eine weitere Anwendung ergibt sich bei der Magnetbandaufzeichnung von Bewegtbildern, bei der eine Datenkompression mittels digitaler Codierung durchgeführt wird. Während bei der Magnetbandaufzeichnung ohne Datenkompression eine Korrektur von Aufzeichnungsfehlern, wie beispielsweise dem Ausfall eines Bildpunktes noch mittels einfacher Bildpunktinterpolation aus benachbarten Bildpunkten möglich ist, kann bei der Verwendung von Datenkompressionstechniken mit einer oftmals angewendeten bildblockweisen Codierung der Bewegtbildsignale beispielsweise der Ausfall eines gesamten Blockes erst durch bewegungsinformationsgestützte Interpolation dieses Blockes aus benachbarten Bildern verhindert werden.

Voraussetzung für eine bewegungsinformationsgestütze Signalverarbeitung ist die Ermittlung von korrekten Bewegungsinformationen. Hinsichtlich eines möglichen HDTV-Studio-Szenarios mit Verwendung von Bewegungsinformationen im Studio zur

- verbesserten Rauschreduktion,
- Normkonversion,
- Zeitlupenerzeugung,
- Bildwiedergabe mit erhöhter Bildwechselfrequenz,
- Zeilensprung-nach-Progressiv-Umwandlung beim Video-zu-Film-Transfer,
- Übertragung von analog codierten Bewegtbildsignalen mit zusätzlicher Bewegungsinformation (z. B. bei HD-MAC mit DATV oder bei verbessertem PAL-System mit Bewegungsvektoren),
- Übertragung von digital codierten Bewegtbildsignalen mit zusätzlicher Bewegungsinformation
- und zur Magnetbandaufzeichnung mit verbessertem

Concealment für digital codierte HDTV-Signale und der damit verbundenen Notwendigkeit, neben Bildsignalen vielfach auch Bewegungsinformation für die weitere Signalverarbeitung zur Verfügung zu stellen, stellt sich die Frage, wie Bewegungsinformation im Studio sinnvollerweise erzeugt werden sollte.

Alle bisher bekannten Verfahren zur Bewegtbildaufnahme führen eine Bildabtastung derart durch, daß Signale für ein bestimmtes Bildabtastformat optimiert erzeugt werden. Dies ist beispielsweise bei der direkten Erzeugung von Bildsignalen mit 625 Zeilen und 50 Hz Bildwechselfrequenz der Fall. Ebenso bei der örtlichen Offsetabtastung zur Erzeugung optimal aufgelöster Bilder in einem bestimmten Bildformat, wie z.B. bei 1250-zeiligen, 50Hz-Progressiv-Bildern mit diagonaler Ortsauflösung. Auch sind Abtastverfahren vorgeschlagen worden, die durch eine Unterabtastung der Chrominanzanteile in der Kamera eine für ein bestimmtes Bildformat optimale Abtastung, hier entsprechend den Anforderungen des menschlichen Gesichtssinns mit reduzierter Chrominanzauflösung, ermöglichen sollen.

Entsprechend wird die Ermittlung von Bewegungsinformation auf der Basis der von heutigen Kameras gelieferten Bildsignale beeinträchtigt durch die aus Bandbreitengründen begrenzte zeitliche Auflösung der hochauflösenden Bildsignale. Der hierdurch bedingte zeitliche Alias im Bildsignal führt bei einer im Meßbereich gegebenen Ortsauflösung ab einer entsprechenden Geschwindigkeit dazu, daß die Geschwindigkeit prinzipiell, also unabhängig vom verwendeten Bewegungsmeßverfahren, nicht mehr korrekt gemessen werden kann. Mehrdeutigkeiten beispielsweise an periodischen Bildstrukturen führen bei der Bewegungsmessung zu entsprechend inkorrekter Bewegungsinformation, was prinzipiell von keinem Verfahren zur Bewegungsmessung verhindert werden kann. Auch kann beispielsweise bei einer schnellen Bewegung eines sehr kleinen Objektes vor einem strukturierten Bildhintergrund eine korrekte Bewegungsmessung verhindert werden, da durch die örtliche Aufnahmeapertur bei nicht ausreichender zeitlicher Auflösung eine zu starke Helligkeitsänderung des kleinen Objektes hervorgerufen werden kann.

Fehler, die infolge der Ermittlung von falschen Bewegungsinformationen bei der Zwischenbildinterpolation entstehen können, sind oftmals sehr störend, beispielsweise wenn kurzzeitig ein örtlich hochaufgelöster Bildinhalt an einer völlig falschen Ortsposition "aufblitzt". Andere Fehler, die dadurch entstehen, daß korrespondierender Bildinhalt in aufeinanderfolgenden Bildern nicht zugeordnet werden kann, führen beispielsweise zu einer stark reduzierten Ortsauflösung bei der Bildinterpolation (Rückfallmodus).

Eine Erhöhung der zeitlichen Abtastfrequenz und die damit verbundene Verminderung von zeitlichem Alias bei der Bildaufnahme ist zur Reduktion der Häufigkeit solcher Fehler bei der Bewegungsmessung von Vorteil.

Aus der DE-A-40 04 437 ist ein Verfahren zur Ermittlung von Bewegungsinformation bekannt, das eine erhöhte Bildwechselfrequenz und damit reduzierten zeitlichen Alias geeignet ausnutzen kann. Eine Erhöhung der zeitlichen Abtastrate bei der Bildaufnahme ergibt Vorteile für die Bewegungsschätzung. Denn bei erhöhter zeitlicher Abtastrate sind die Objektverschiebungen zwischen zwei aufeinanderfolgenden Bildern für gleiche Objektgeschwindigkeiten geringer. Dies bedeutet, daß für eine gegebene Ortsfrequenz im Bild erst bei höheren Geschwindigkeiten zeitlicher Alias auftritt, so daß bis zu höheren Geschwindigkeiten eine eindeutige Geschwindigkeitsmessung möglich ist.

Der Versuch, die Bildwechselfrequenz bei der Bildaufnahme zu erhöhen, stößt durch die Erhöhung der erforderlichen Bandbreite des Bildaufnahmesystems schnell an die Grenzen des technisch Realisierbaren.

Eine Kamera mit einem Abtaststandard von beispielsweise 1250Zeilen/50Hz/2:1 (mit z.B. etwa 22 bis 30 MHz Bandbreite) ist realisiert und erprobt, während eine Kamera mit etwa doppelter Bandbreite (z.B. 1250Z/50Hz/1:1) noch im Entwicklungsstadium ist. Für ein Bildaufnahmesystem mit einem Abtaststandard von z.B. 1250Z/100Hz/1 (mit z.B. 120MHz Bandbreite) ist der Zeitpunkt der Realisierung zur Zeit nicht absehbar und ein hochauflösendes Bildaufnahmesystem mit einer noch höheren Bildwechselfrequenz von z.B. 200 Hz, die zur korrekten Zwischenbildinterpolation Vorteile hätte, ist der Zeitpunkt der technischen Realisierung erst recht nicht absehbar.

Ausgehend vom vorstehend beschriebenen Stand der Technik liegt der Erfindung die Aufgabe zugrunde, ein Verfahren zur Aufnahme von Bewegtbildern anzugeben, mit dem bei Vorliegen einer begrenzten Signalbandbreite der zeitliche Alias bei der Bildaufnahme stark reduziert wird und damit die Häufigkeit von Meßfehlern bei der Ermittlung von Bewegungsinformation prinzipiell, d.h. unabhängig vom verwendeten Bewegungsmeßverfahren, stark vermindert wird.

Diese Aufgabe wird durch die Merkmale der Ansprüche 1, 13 und 14 gelöst.

Neben den Bildaufnahmesensoren für das Bildsignal ("Bildinhaltssensoren") wird demgemäß ein weiterer (oder mehrere) Bildaufnahmesensor(en) als "Bewegungssensor" verwendet, dessen Signal durch eine erhöhte Bildwechselfrequenz im Vergleich zu den Bildinhaltssensoren gekennzeichnet ist und für die Ermittlung von Bewegungsinformationen genutzt wird.

Die Vorteile der Erfindung bestehen im wesentlichen darin, daß das beanspruchte Verfahren auch dann korrekte Bewegungsinformationen liefert, wenn herkömmliche Bildaufnahmeverfahren mit gleicher Technologie bzw. Bandbreite bereits aufgrund von zeitlichem Alias zu fehlerhaften Ergebnissen bei der Ermittlung von Bewegungsinformationen führen. Dieser Vorteil wird insbesondere dadurch erreicht, daß bei der Ermittlung der Bewegungsinformation das Bildsignal des Bewegungssensors mit zusätzlichen Bewegungsphasen als zusätzliches Bestimmungskriterium zur Verfügung steht. Dieser und weitere Vorteile ergeben sich aus der Erläuterung eines Diagrammes und eines Ausführungsbeispiels anhand der Figuren.

Es zeigt:

Figur 1      ein Blockschaltbild zur grundsätzlichen Erläuterung des beanspruchten Verfahrens,

Figur 2      ein Blockschaltbild eines Bildaufnahmeszenarios, bei dem die Erfindung verwendbar ist,

Figur 3      ein Diagramm zur Verdeutlichung der mit dem beanspruchten Verfahren erreichbaren Reduktion von zeitlichem Alias,

Figur 4      eine Skizze eines Aufbaus eines Objektivs mit Ausspiegelung des Strahlenganges für den beim beanspruchten Verfahren vorgesehenen Bewegungssensor,

Figur 5      eine Skizze des Prinzips eines Kamera-Strahlteilers mit vier optischen Ausgängen für vier Bildaufnahmesensoren, von denen einer als Bewegungssensor und drei als Bildinhaltssensoren ausgelegt sind, und

Figur 6      eine Skizze zum Aufbau eines kompakten Prismenstrahlteilers für das beanspruchte Verfahren.

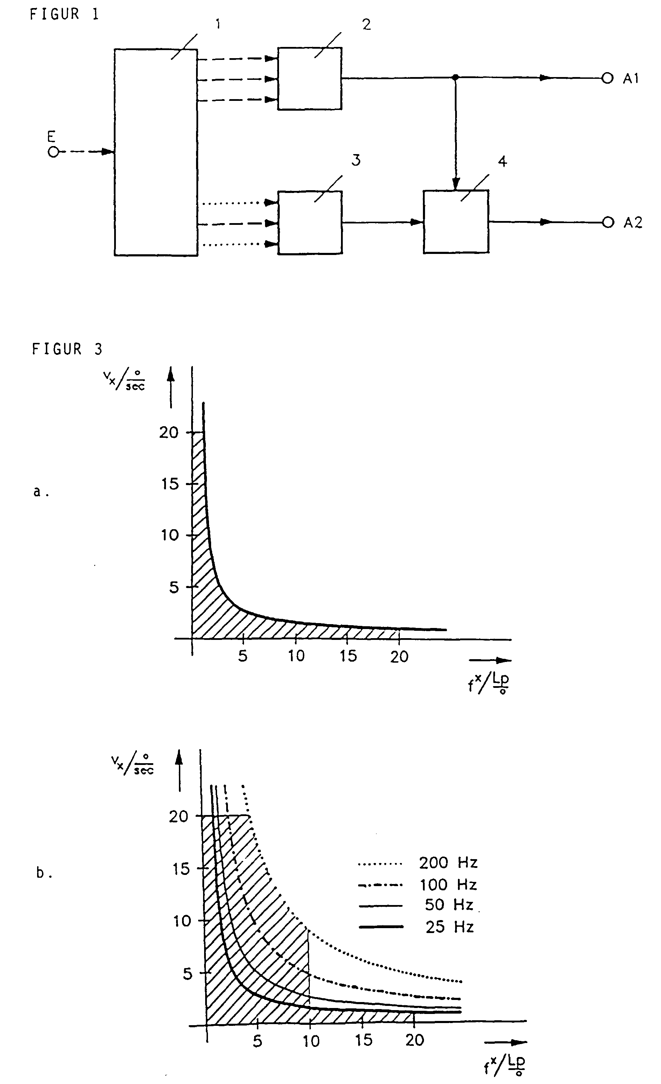

Die Figur 1 zeigt ein Blockschaltbild zur grundsätzlichen Erläuterung des beanspruchten Verfahrens. Die gestrichelten und gepunkteten Verbindungslinien zwischen den Blöcken kennzeichnen optische Verbindungen, die durchgezogenen Verbindungslinien bedeuten elektrische Verbindungen. Das über den optischen Eingang E zugeführte Licht einer Szene wird über eine Bildaufnahmeoptik 1, die neben der Abbildungsoptik einen Strahlteiler für die Lichtaufteilung enthält, auf die Bildinhaltssensoren 2 und auf einen (oder mehrere) Bewegungssensor(en) 3 abgebildet.

Die Bildinhaltssensoren 2, bei welchen es sich beispielsweise um drei Sensoren mit 1250 Zeilen, 25 Hz Bildwechselfrequenz und zeilensprungfreier Bildabtastung für die drei Farbauszüge Rot, Grün und Blau handelt, liefern das entsprechende örtlich hochauflösende Bildsignal an den Ausgang A1 für die Übertragung, Aufzeichnung oder Weiterverarbeitung.

Der Bewegungssensor 3 tastet die Abbildung der Szene mit im Vergleich zum Bildinhaltssensor erhöhter zeitlicher Auflösung und reduzierter örtlicher Auflösung ab. Das entsprechende Bildsignal, das beispielweise nur Luminanzinformationen mit gleicher Signalbandbreite und ein Format von 625 Zeilen, 100 Hz Bildwechselfrequenz und zeilensprungfreier Bildabtastung umfaßt, wird einem Schaltungsblock 4 zur Ermittlung von Bewegungsinformationen zugeführt. Die Bewegungsmessung im Schaltungsblock 4, bei der beispielsweise eine differentielle Meßmethode verwendet wird, wie sie in der Zeitschrift Signal Processing: Image Communication 2 (1990), S. 69 ff. oder der Zeitschrift Proceedings of the IEEE, VOL. 73, No. 4, April 1985, S. 523 ff. beschrieben ist, kann die im Vergleich zum Bildsignal des Ausgangs Al zusätzlichen Bewegungsphasen als Bestimmungskriterium nutzen. Darüber hinaus kann auch das von den Bildsensoren 2 dem Schaltungsblock 4 zugeführte, örtlich hochauflösende Bildsignal bei der Bewegungsmessung 4 verwendet werden, um beispielsweise ein bildpunktgenaues Bewegungsvektorfeld zu erzeugen.

Insgesamt steht somit am Ausgang eine Bewegtbildbeschreibung in Form eines örtlich hochaufgelösten Bildsignals am Ausgang A1 (beispielsweise 1250z/25Hz/1:1) und zusätzlichen Bewegungsinformationen am Ausgang A2 (beispielsweise ein bildpunktgenaues Bewegungsvektorfeld) zur Verfügung. Eine solche Bewegtbildbeschreibung ist geeignet zur beliebigen Zwischenbildinterpolation mittels bewegungsinformationsgestützter Signalverarbeitung. So ist eine direkte bewegungsinformationsgestützte Interpolation von Bildsequenzen in verschiedenen HDTV-Studiostandards, wie dem europäischen 1250Z/50Hz/2:1 bzw. 1250Z/50Hz/1:1, dem japanischen 1125Z/60Hz/2:1 und dem in Amerika möglichen 1050Z/59.94Hz/2:1 Studiostandard, ebenso wie in die derzeit verbreiteten TV-Studiostandards möglich.

Auch ist eine direkte Erzeugung von Sequenzen für verschiedene Übertragungsstandards wie PAL, D2-MAC, HD-MAC und digitale Standards möglich, wobei den bei HD-MAC-Codern und bei digitalen Codecs benötigten Bewegungsinformationen die mittels des beanspruchten Verfahrens erhöhte Zuverlässigkeit und Genauigkeit der Bewegungsinformationen zugute kommt.

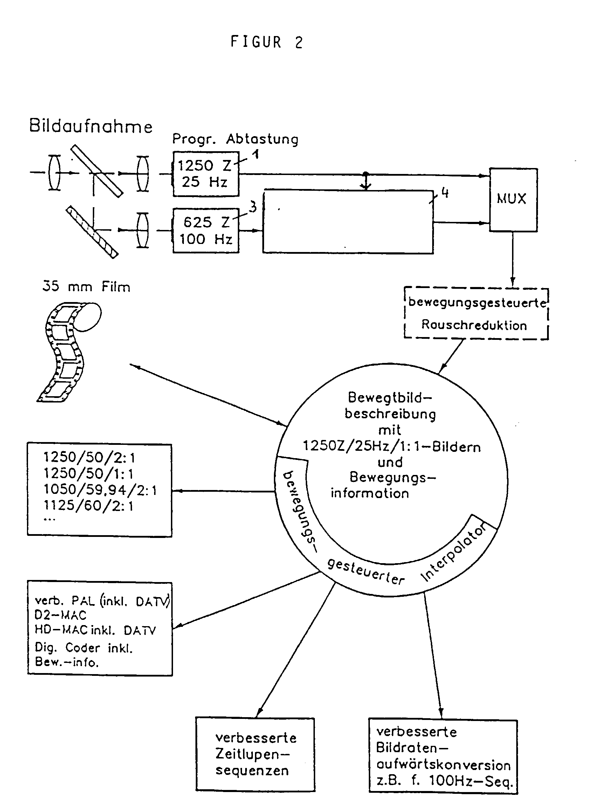

Die Figur 2 zeigt ein Blockschaltbild eines Bildaufnahmeszenarios, bei dem die Erfindung verwendet ist.

Neben der direkten Erzeugung von verschiedenen Studiostandards und Übertragungsstandards ausgehend von der beschriebenen Bewegtbildbeschreibung mit beispielsweise 1250-zeiligen, progressiven, 25 Hz-Bildern und Bewegungsinformationen ist auch eine direkte Erzeugung von Sequenzen in großflächenflimmerfreien Wiedergabenormen (z.B. 100 Hz Bildwechselfrequenz) und von Zeitlupensequenzen mit Bildern korrekter Bewegungsphase möglich.

Gemäß einer vorteilhaften Ausgestaltung kann auch bei einer solchen Bewegtbildbeschreibung eine effektive bewegungsinformationsgestützte Rauschreduktion mittels zeitlicher Filterung in Bewegungsrichtung direkt nach der Aufnahme erfolgen, was insbesondere für HDTV-Signale wegen der erhöhten Signalbandbreite und damit erhöhten Rauschstörungen vorteilhaft ist.

Als weiterer Vorteil einer solchen Bewegtbildbeschreibung mit Bildern und geeignet erzeugter Bewegungsinformation ist eine Art Überstandard-Eigenschaft erkennbar: Sequenzen in beliebigen Fernsehnormen können auf der Basis einer solchen Bewegtbildbeschreibung direkt erzeugt werden.

Eine nach dem beanspruchten Verfahren konstruierte Kamera erzeugt somit eine Art übergeordnete (Überstandard-) Bewegtbildbeschreibung.

Bei dem in Figur 2 dargestellten Beispiel mit 1250-zeiligen, progressiven 25 Hz-Bildern ist darüber hinaus ein direkter Austausch mit dem weltweit anerkannten Austauschstandard für hochauflösende Bilder, dem 35mm Kinofilm mit 24/25 Hz-Bildern, möglich.

Beim Verfahren nach der Erfindung wird folglich die Bewegungsinformation nicht, wie beim Stand der Technik, nur aus dem aufnahmeseitigen Bildsignal, dessen Bildwechselfrequenz gleich oder höher als die zu übertragene Bildwechselfrequenz sein kann, ermittelt, sondern zusätzlich (oder ausschließlich) aus dem aufnahmeseitigen Signal eines (oder mehrerer) Bildaufnahmesensors als Bewegungssensor mit reduzierter Orts- und erhöhter zeitlicher Auflösung im Vergleich zum Bildsignal.

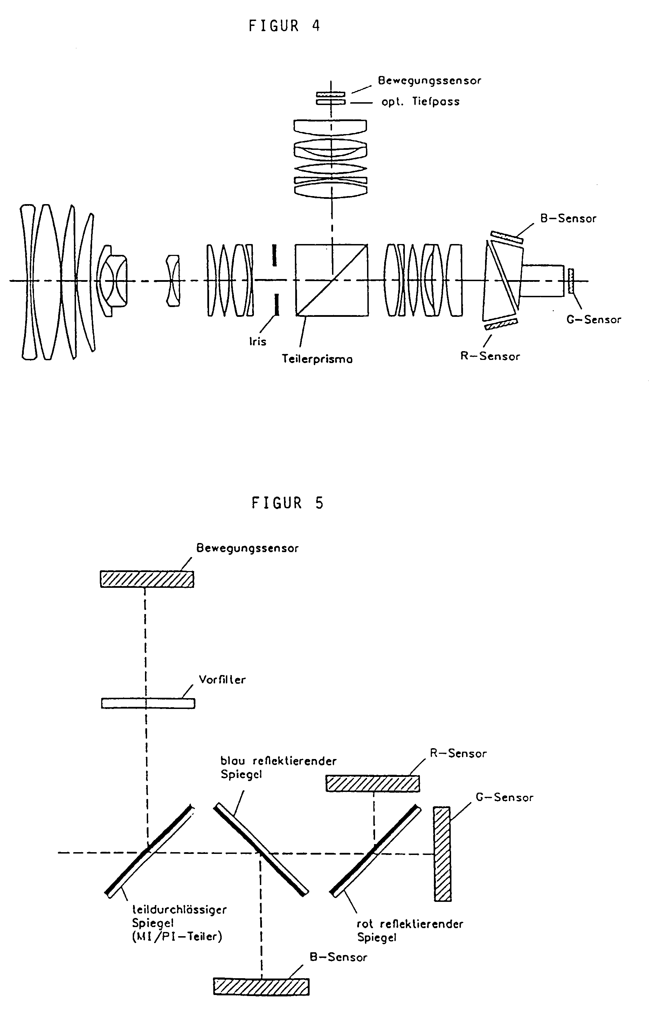

Zur Verdeutlichung der Reduktion von zeitlichem Alias beim beanspruchten Bildaufnahmeverfahren im Vergleich zu herkömmlichen Bildaufnahmeverfahren sind in Figur 3 Diagramme dargestellt.

Der Vergleich wird beispielhaft geführt für Bildaufnahmesensoren mit einer einheitlichen Bandbreite, die einem progressiven Abtaststandard von 1250 Zeilen und 25 Hz Bildwechselfrequenz entspricht.

Der eindeutig bestimmbare Geschwindigkeitsbereich eines Bildinhaltes mit einer Ortsfrequenz $f^x$ ist bei einem zeitlichen Abtastabstand von der Bilddauer $T_B$ gegeben durch

$$O \leq |v_x| < 1/(2T_B) \cdot (1/f^x)$$

Nimmt man für einen Vergleich eine maximal sinnvoll darstellbare Geschwindigkeit von einer Bildweite pro Sekunde für ein konventionelles TV-System an, so entspricht dies beim konventionellen TV-System mit einem Bildseitenverhältnis von 4:3 sowie einem Betrachtungsabstand von 4H einer Winkelgeschwindigkeit von 18,92°/sec. Setzt man in einem ersten Ansatz bei einem HDTV-System die gleiche maximal sinnvolle Winkelgeschwindigkeit des betrachtenden menschlichen Auges an, so ergibt sich also eine in dem Vergleich zu berücksichtigende maximale Geschwindigkeit von etwa 20°/sec.

Ein HDTV-System mit einem Bildseitenverhältnis von 16:9 und einem reduzierten Betrachtungsabstand von 2H besitzt einen Betrachtungswinkel von 47,92°. Wird die im CCIR vorgeschlagene Anzahl von 1920 Bildpunkten pro Zeile angesetzt, so ist von einer maximalen Ortsauflösung von etwa $20^{LP}/_o$ (LP=Linienpaare) auszugehen.

Die in Figur 3a gezeigte Kurve gibt für einen progressiven Abtaststandard mit 25 Hz Bildwechselfrequenz, der nur Bildinhaltssensoren verwendet (Kinofilm-Standard), die maximal eindeutig bestimmbare Geschwindigkeit $v_x$ in°/sec in Abhängigkeit von der im Meßbereich gegebenen Ortsfrequenz $f^x$ in $^{LP}/_o$ an. Der entsprechend dem für die Geschwindigkeit und die Ortsauflösung angesetzten sinnvollen Maximalwert relevante Geschwindigkeits-/Ortsfrequenz-Bereich, in dem eine eindeutige Geschwindigkeitsmessung erreichbar ist, ist schraffiert dargestellt.

Wird nun entsprechend dem beanspruchten Verfahren neben den Bildinhaltssensoren ein zusätzlicher Bewegungssensor beispielsweise gleicher Signalbandbreite verwendet, so vergrößert sich der eindeutig meßbare Geschwindigkeits-/Ortsfrequenzbereich erheblich. Figur 3b zeigt dies am Beispiel eines zusätzlichen Bewegungssensors mit im Vergleich zu den Bildinhaltssensoren halbierter Horizontalfrequenz, um den Faktor 4 reduzierter Vertikalfrequenz, aber bis um den Faktor 8 erhöhter zeitlicher Auflösung (200 Hz).

In horizontaler Richtung sind bis zur halben örtlichen Grenzfrequenz und in vertikaler Richtung bis zu einem Viertel der örtlichen Grenzfrequenz jeweils um das 8-fache höhere Geschwindigkeiten eindeutig bestimmbar. Der schraffierte Bereich zeigt nur die Verbesserung für Geschwindigkeiten unterhalb der als sinnvoll angenommenen maximalen Geschwindigkeit.

Im folgenden werden zwei Ausführungsformen für den erforderlichen optischen Strahlteiler beschrieben.

Die Szene soll entsprechend dem beanspruchten Verfahren beispielsweise mit drei örtlich hochauflösenden und zeitlich niedrig auflösenden Sensoren für die drei Farbauszüge Rot, Grün und Blau sowie gleichzeitig mit einem Bildaufnahmesensor hoher Zeitauflösung und geringerer Ortsauflösung aufgenommen werden. Die ersten drei der Sensoren liefern das farbige Bildsignal (Bildinhaltssensoren), während vom Luminanzsignal des vierten Sensors die Bewegungsinformationen abgeleitet werden sollen (Bewegungssensor). Da die Bildaufnahme mit einem einzelnen Objektiv erfolgen soll, ist eine Aufspaltung des Lichts in vier Anteile erforderlich. Dazu gibt es beispielsweise die beiden folgenden Möglichkeiten:

1. Ausspiegelung eines Teils des einfallenden Lichts innerhalb des Objektivs und Abbildung dieses Lichtanteils der Szene auf dem am Objektiv separat angebrachten Bewegungssensor; hinter dem Objektiv Aufspaltung des verbleibenden Lichts in die drei Farbkomponenten mittels eines üblichen Strahlteilers in der Farbkamera und Abbildung dieser Farbanteile auf die Bildinhaltssensoren in der Kamera.

2. Lichtteilung komplett in der Kamera mittels eines Strahlteilers mit vier optischen Ausgängen; davon ein Ausgang mit weißem Licht für den Bewegungssensor und je ein Ausgang für jeden der drei Farbauszüge (Bildinhaltssensoren).

Die Figur 4 zeigt die erste der beiden Möglichkeiten:
Die Aufspaltung des einfallenden Lichts erfolgt im Objektiv der Kamera. Das Objektiv besteht im allgemeinen aus mehreren Teilen: Einem Frontteil, einem mehrstufigen Varioteil (bei Zoomobjektiven) und einem Grundobjektiv, welches die Abbildung auf die Kamerasensoren durchführt. Die Blende befindet sich zwischen dem Varioteil und dem Grundobjektiv.

Zur Abbildung der Szene auf dem Bewegungssensor wird zwischen Blende und Grundobjektiv ein Strahlteilerprisma eingefügt. Es spiegelt einen Teil des einfallenden Lichts im Winkel von 45 Grad aus dem Strahlengang des Objektivs aus. Dieser reflektierte Anteil des Lichts wird über ein zweites, an das Format des Bewegungssensors angepaßtes Grundobjektiv auf dem Bewegungssensor abgebildet. Das durchgelassene Licht wird vom Grundobjektiv über den Strahlteiler mit drei Ausgängen auf den Bildinhaltssensoren abgebildet.

Die Ausspiegelung kann grundsätzlich auch an einer anderen als im obigen Beispiel beschriebenen Stelle des Objektivs erfolgen.

Erfolgt die Ausspiegelung - wie im Beispiel oben beschrieben - zwischen Blende und Grundobjektiv, dann ergeben sich folgende Vorteile:

- Es ist nur eine Blende notwendig, die die Beleuchtungsstärke auf allen Sensoren bestimmt.

- Objektive, die für den Einsatz eines Prüfprojektors oder Range-Extenders (Ausweitung des Zoombereiches) vorgesehen sind, haben an dieser Stelle des Objektivs bereits Platz zum Einbau des Teilerprismas. Dieses bietet Vorteile bei der Konstruktion des Objektivs aufbauend auf bereits vorhandenen Systemkomponenten. Es ist dann nur die Verschiebung des Grundobjektivs erforderlich, um den Glasweg des Teilerprismas auszugleichen.

- Die Ausspiegelung kann in einem anderen Winkel erfolgen, um die Kompaktheit des Objektivs zu erhöhen.

- Die Ausspiegelung kann alternativ auch mit einem Spiegel anstelle eines Prismas durchgeführt werden. Dies führt jedoch zu verstärktem Astigmatismus bei der Abbildung auf dem Bewegungssensor und auf den Bildsensoren.

Die Figur 5 zeigt die zweite der beiden Möglichkeiten:

Die Aufspaltung des Lichts erfolgt komplett hinter dem Objektiv in der Kamera. In Erweiterung einer herkömmlichen Farbkamera mit drei Bildsensoren ist hierbei ein weiterer Sensor in der Kamera für die Ableitung der Bewegungsinformation vorhanden. Ein optischer Strahlteiler mit vier Ausgängen versorgt die vier Sensoren mit dem Licht der Szene.

Die Aufspaltung des Lichts wird von dichroitischen Spiegelschichten durchgeführt. Die erste Spiegelschicht trennt einen Teil des einfallenden weißen Lichts ab. Dieses Licht bildet die Szene auf dem Bewegungssensor ab. Das vom ersten Spiegel durchgelassene Licht wird nun in die drei Farbkomponenten aufgetrennt. Dazu kann zuerst die Blaukomponente und anschließend die Rotkomponente ausgespiegelt werden. Es verbleibt das grüne Licht für den grünen Bildinhaltssensor. Die Aufspaltung in die Farbkomponenten kann auch in anderer Reihenfolge erfolgen.

Die Ausspiegelung kann grundsätzlich ebenfalls auf verschiedene Weise realisiert werden:

- Die Aufspaltung kann mit diskreten, dichroitischen Spiegeln erfolgen. Dabei ist je nach verwendeten Sensoren (Röhren oder CCD-Sensoren) eine Zwischenabbildung notwendig.

- Es kann ein kompakter Prismenstrahlteiler eingesetzt werden. Wie beim herkömmlichen Prismenteiler mit drei Ausgängen werden die Spiegelschichten auf Glasprismen aufgedampft. Durch diesen Aufbau ist ein sehr kompakter Strahlteiler realisierbar. Dieses bietet sich insbesondere beim Einsatz von CCD-Bildsensoren an.

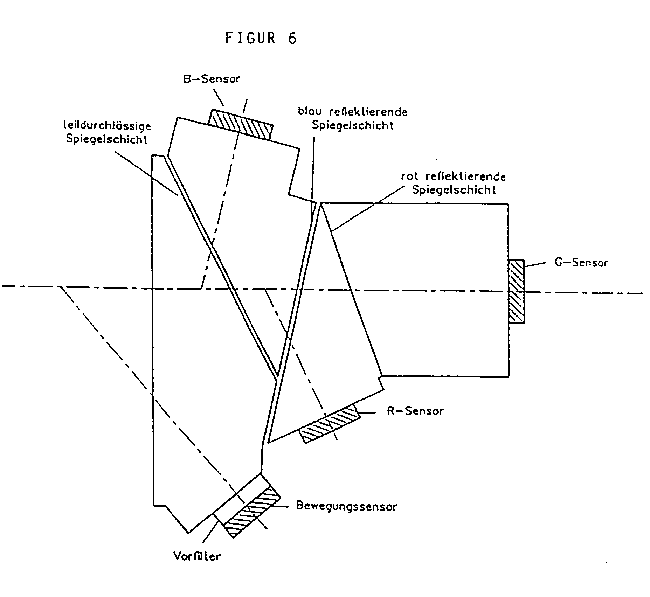

Die Figur 6 zeigt eine Skizze zum prinzipiellen Aufbau eines Prismenstrahlteilers mit vier Ausgängen.

Grundsätzlich können für das Konzept einer Kamera mit vier Bildaufnahmesensoren sowohl Bildaufnahmeröhren als auch Halbleiterbildaufnehmer eingesetzt werden. Zu beachten ist allerdings, daß sowohl für die Ermittlung von Bewegungsinformation aus dem zeitlich hochfrequenten Bildsignal scharfe Einzelbilder, als auch zur Interpolation basierend auf dem zeitlich niederfrequenten, örtlich hochauflösenden Bildsignal scharfe Einzelbilder wünschenswert sind.

Dies kann bei beiden Sensortypen beispielsweise durch eine mechanische Verschlußblende erreicht werden. Da allerdings der Bewegungssensor mit einer anderen Bildwechselfrequenz arbeitet als die Bildinhaltssensoren, sind zwei Verschlußblenden notwendig, die mit unterschiedlicher Umlaufgeschwindigkeit betrieben werden. Eine Umlaufblende befindet sich im Strahlengang des Bewegungssensors, die andere vor der Aufspaltung in die Farbkomponente. Dies läßt sich bei der Strahlteilung im Objektiv und bei der Teilung über diskrete, dichroitische Spiegel in der Kamera durchführen, nicht aber beim Einsatz eines Prismenstrahlteilers.

Werden Halbleiterbildaufnehmer (z.B. CCD-Sensoren) eingesetzt, vereinfacht sich der Aufbau. Da bei diesen die Möglichkeit der elektronischen Verschlußzeitregelung besteht, sind keine zusätzlichen mechanischen Umlaufblenden notwendig. Die Verschlußzeiten (Integrationszeiten) aller Sensoren sind damit unabhängig voneinander einstellbar. Somit ist auch das Konzept einer Strahlteilung über einen Prismenblock realisierbar.

Eine weitere Ausführungsform besteht darin, unterschiedliche Sensortypen zu verwenden. So könnte beispielsweise ein Halbleiter-Bewegungssensor die Bewegungsinformation für eine örtlich hochauflösende Röhrenkamera liefern.

Aufgrund der im Vergleich zu den Bildinhaltssensoren geringeren örtlichen Auflösung des Bewegungssensors kommt es bei geringeren Ortsfrequenzen im Bild zu Aliasfehlern bei der Abtastung durch den Bewegungssensor. Dies tritt bei Röhrenbildaufnehmern in vertikaler Richtung durch die zeilenweise Abtastung und bei Halbleiterbildaufnehmern vertikal und horizontal infolge der zweidimensionalen Abtastung auf. Je nach Genauigkeitsanforderungen an die Bewegungsmessung kann sich dieses störend auswirken.

Zur Reduzierung dieser örtlichen Aliasfehler wird bei einer vorteilhaften Weiterbildung der Erfindung der Bewegungssensor nicht exakt in der Schärfeebene der Abbildung positioniert. Die unscharfe Abbildung bewirkt eine Tiefpassfilterung des Bildsignals. Da das nun erzeugte Abbild weniger hochfrequente Anteile enthält, treten weniger Aliasstörungen auf.

Alternativ dazu kann die Reduzierung der örtlichen Aliasfehler mit einer doppelbrechenden Quarzscheibe durchgeführt werden, deren optische Achse um 45 Grad geneigt ist. Das einfallende Licht wird dabei in zwei Anteile aufgespalten und beide Anteile gegeneinander versetzt auf dem Aufnahmesensor abgebildet. Durch Kaskadierung mehrerer Filterscheiben unterschiedlicher Dicke kann die Modulationsübertragungsfunktion des Vorfilters variiert werden. Die Orientierung der Filterscheiben legt die Filterrichtung (horizontal, vertikal, diagonal) fest. Im Gegensatz zur oben beschriebenen Möglichkeit kann hier die Unschärfe gezielt herbeigeführt werden. Durch die Filterung mit doppelbrechenden Quarzscheiben werden hochfrequente Ortsfrequenzen gedämpft und die Abtastung führt zu geringeren Aliasstörungen.

Gemäß einer weiteren vorteilhaften Weiterbildung der Erfindung kann bei der Ermittlung von Bewegungsinformation, beispielsweise in Form von Bewegungsvektorfeldern die Messung der Objektgeschwindigkeit nach einer Eckendetektion an den Ecken von bewegten Strukturen durchgeführt werden. Hierdurch kann in einem kleinen örtlich-zeitlichen Meßbereich die korrekte Objektverschiebung gemessen werden, im Gegensatz zur Messung an einer Strukturkante, wo nur die zum Kantenverlauf senkrechte Verschiebungskomponente eindeutig meßbar ist.

Aufgrund des reduzierten zeitlichen Alias bei der Bewegtbildabtastung ergibt sich eine erhöhte Zuverlässigkeit der Bewegungsvektorfelder. Rauscheinflüsse können jedoch auch weiterhin zu vereinzelt falschen Bewegungsvektoren führen. Zur Homogenisierung der Vektorfelder, die entsprechend zu reduzierten Datenraten führt, eignet sich neben einer Medianfilterung insbesondere auch eine zweidimensionale Häufigkeitsfilterung der Bewegungsvektorfelder. Diese zeichnet sich dadurch aus, daß sie zum einen rekursiv und zum anderen bedingt (d.h. nur wenn der häufigste Vektor auch ein gutes Matchergebnis liefert, wird er zugeordnet) durchgeführt wird. Durch die Rekursivität wird eine erhöhte Homogenität der Vektorfelder erreicht. Die Bedingtheit der Filterung garantiert, daß die Bewegungsvektoren von sehr kleinen bewegten Objekten nicht weggefiltert werden.

Wird bei der Ermittlung der Bewegungsvektoren in Ortsbereichen konstanter Helligkeit innerhalb eines bewegten Objektes der Nullvektor als Bewegungsinformation ermittelt, dann erfolgt eine Nachverarbeitung derart, daß der Nullvektor durch angrenzende Verschiebungsvektoren, die ungleich dem Nullvektor sind, ersetzt wird, falls der Ersatzvektor ebenfalls ein gutes Matchergebnis liefert, d.h. die Bewegung des betrachteten Bildbereiches gut beschreiben kann. Dies hat den Vorteil, daß die Vektorfelder homogener werden, d.h. größere Bereiche einheitlicher Bewegungsinformation entstehen, und damit eine größere Datenreduktion bei der Codierung der Bewegungsinformation erreicht werden kann.

Eine vorteilhafte Anwendung des beanspruchten Verfahrens liegt bei einem sog. Chromakey-Mixer. Dabei kann die erzeugte Bewegungsinformation als zusätzliches Bestimmungskriterium für die Segmentierung in Vordergrund-Objekt und ruhendem Hintergrund verwendet werden, um das inkorrekte Einblenden des Hintergrundbildes in Bereiche des Vordergrund-Objektes an den Stellen zu verhindern, an denen die Farbe des Vordergrund-Objektes ähnliche der Key-Farbe ist.

Eine weitere vorteilhafte Ausgestaltung des beanspruchten Verfahrens liegt in der Verwendung des vorstehend beschriebenen hierarchischen Sensorkonzeptes ( örtlich hoch-/ zeitlich niedrigaufgelöst und zeitlich hoch-/ örtlich niedrigaufgelöst ) im Rahmen eines hierarchischen Verfahrens zur Bewegungsmessung, wie es im Tagungsband "Proceedings of the Fourth International Workshop on HDTV and beyond ( Chupeau : Multiscale Motion Estimation ), Turin, Sept.1991, beschrieben ist. Bei diesem Verfahren wird die Messung in mehreren, hierarchisch aufgebauten Stufen unterschiedlicher Ortsauflösungen durchgeführt, um den Anteil von Falschmessungen infolge von zeitlichem Alias zu reduzieren.

## Patentansprüche

1. Verfahren zur Aufnahme von Bewegtbildern für eine bewegungsinformationsgestützte Signalverarbeitung von Bewegungen abzubildender Objekte unter Verwendung von Bildaufnahmesensoren (2) als Bildinhaltssensoren (2), **dadurch gekennzeichnet**, daß mindestens ein weiterer Bildaufnahmesensor (3) vorgesehen ist, der als Bewegungssensor (3) verwendet wird und im Vergleich zu den Bildinhaltssensoren (2) eine erhöhte Bildwechselfrequenz aufweist, und daß das Ausgangssignal des weiteren Bildaufnahmesensors (3) für die Ermittlung von Bewegungsinformation verwendet wird.

2. Verfahren nach Anspruch 1, **dadurch gekennzeichnet**, daß der Bewegungssensor (3) im Vergleich zu den Bildinhaltssensoren (2) eine reduzierte Ortsauflösung hat.

3. Verfahren nach einem der vorhergehenden Ansprüche, **dadurch gekennzeichnet**, daß zur Ermittlung von Bewegungsinformation neben dem Signal des Bewegungssensors (3) auch das örtlich hochauflösende Signal der Bildinhaltssensoren (2) im Sinne einer Feinkorrektur verwendet wird.

4. Verfahren nach einem der vorhergehenden Ansprüche, **dadurch gekennzeichnet**, daß es im Rahmen eines hierarchischen Bewegungsmeßverfahrens, bei dem in mehreren, hierarchisch aufgebauten Stufen unterschiedlicher Ortsauflösung gemessen wird, verwendet wird.

5. Verfahren nach einem der vorhergehenden Ansprüche, **dadurch gekennzeichnet**, daß mehrere Bewegungssensoren (3) für verschiedene Farbauszüge vorgesehen sind, deren Signale für die Ermittlung von Bewegungsinfornlation verwendet werden.

6. Verfahren nach einem der vorhergehenden Ansprüche, **dadurch gekennzeichnet**, daß die Aufteilung des Lichtstrahles auf Bildinhaltssensoren (2) und Bewegungssensoren (3) mittels einer Ausspiegelung innerhalb des Objektives erfolgt und der Bewegungssensor (3) am oder im Objektiv angebracht ist.

**7.** Verfahren nach einem der vorhergehenden Ansprüche, **dadurch gekennzeichnet**, daß die Aufteilung des Lichtstrahles auf Bildinhaltssensoren (2) und Bewegungssensoren (3) mittels eines Strahlteilers mit mehreren optischen Ausgängen außerhalb des Objektivs im Kamerakopf erfolgt.

**8.** Verfahren nach einem der vorhergehenden Ansprüche, **dadurch gekennzeichnet**, daß im optischen Strahlengang für den Bewegungssensor vor der Abtastung eine optische Vorfilterung im Ortsbereich zur Reduktion von Aliasstörungen durchgeführt wird.

**9.** Verfahren nach einem der vorhergehenden Ansprüche, **dadurch gekennzeichnet**, daß bei der Ermittlung der Bewegungsinformation eine Eckendetektion und eine gezielte Geschwindigkeitsmessung an Objektecken durchgeführt wird.

**10.** Verfahren nach einem der vorhergehenden Ansprüche, **dadurch gekennzeichnet**, daß bei der Erzeugung der Bewegungsinformation Bewegungsvektorfelder ermittelt werden und diese Bewegungsvektorfelder durch eine rekursive Häufigkeitsfilterung nachverarbeitet werden, wobei der häufigste Vektor nur zugeordnet wird, wenn er auch ein gutes Matchergebnis liefert.

**11.** Verfahren nach einem der vorhergehenden Ansprüche, **dadurch gekennzeichnet**, daß in Ortsbereichen konstanter Helligkeit innerhalb eines bewegten Objektes, in dem entsprechend der Nullvektor zugeordnet wurde, in der Weise eine Nachverarbeitung der Vektorfelder erfolgt, daß der Nullvektor durch angrenzende Verschiebungsvektoren, die ungleich dem Nullvektor sind, ersetzt wird, wenn der Ersatzvektor ebenfalls ein gutes Matchergebnis liefert.

**12.** Verfahren nach einem der vorhergehenden Ansprüche, **dadurch gekennzeichnet**, daß die erzeugte Bewegungsinformation bei einem Chromakey-Mixer als zusätzliches Bestimmungskriterium für die Segmentierung in Vordergrund-Objekt und ruhenden Hintergrund verwendet wird, um das inkorrekte Einblenden des Hintergrundbildes in Bereiche des Vordergrund-Objektes an den Stellen zu verhindern, in denen die Farbe des Vordergrund-Objektes ähnlich der Key-Farbe ist.

**13.** Kamera zur Aufnahme von Bewegtbildern für eine bewegungsinformationsgestützte Signalverarbeitung von Bewegungen abzubildender Objekte unter Verwendung von Bildaufnahmesensoren (2) als Bildinhaltssensoren (2), **gekennzeichnet durch**, mindestens einen weiteren Bildaufnahmesensor (3) als Bewegungssensor (3), mit einer im Vergleich zu den Bildinhaltssensoren (2) erhöhten Bildwechselfrequenz, und mit einem Ausgangssignal zur Ermittlung der Bewegungsinformationen.

**14.** Einrichtung zur Aufnahme von Bewegtbildern für eine bewegungsinformationsgestützte Signalverarbeitung von Bewegungen abzubildender Objekte unter Verwendung von Bildaufnahmesensoren (2) als Bildinhaltssensoren (2), **gekennzeichnet durch**, mindestens einen weiteren Bildaufnahmesensor (3) als Bewegungssensor (3), mit einer im Vergleich zu den Bildinhaltssensoren (2) erhöhten Bildwechselfrequenz, und mit einem Ausgangssignal zur Ermittlung der Bewegungsinformationen.

**15.** Einrichtung nach Anspruch 14, dadurch gekennzeichnet, daß die Bewegungsinformation des Bewegungssensors (3) zur Erzeugung von Sequenzen für verschiedene Übertragungsstandards und/oder zur Erzeugung von Sequenzen in großflächenflimmerfreien Wiedergabenormen und/oder von Zeitlupensequenzen vorgesehen ist.

**Claims**

**1.** Method for the recording of moving pictures for a movement-information-aided signal processing of movements of objects to be imaged using picture recording sensors (2) as picture content sensors (2), characterized in that at least one further picture recording sensor (3) is provided which is used as movement sensor (3) and has an increased picture frame frequency compared with the picture content sensors (2), and in that the output signal of the further picture recording sensor (3) is used to determine movement information.

**2.** Method according to Claim 1, characterized in that the movement sensor (3) has a reduced positional resolution compared with the picture content sensors (2).

**3.** Method according to one of the preceding claims, characterized in that, to determine the movement information, the positionally high-resolving signal of the picture content sensors (2) is used in addition to the signal of the movement sensor (3) for the purpose of a fine correction.

**4.** Method according to one of the preceding claims, characterized in that it is used as part of a hierarchical movement measurement method in which measurement is carried out in a plurality of hierarchically constructed stages of different positional resolution.

5. Method according to one of the preceding claims, characterized in that a plurality of movement sensors (3) are provided for different chromatic components whose signals are used to determine movement information.

6. Method according to one of the preceding claims, characterized in that the light beam is distributed over picture content sensors (2) and movement sensors (3) by means of a reflection inside the objective and the movement sensor (3) is fitted on or in the objective.

7. Method according to one of the preceding claims, characterized in that the light beam is distributed over the picture content sensors (2) and the movement sensors (3) by means of a beam splitter having a plurality of optical outlets outside the objective in the camera head.

8. Method according to one of the preceding claims, characterized in that, in the optical beam path for the movement sensor, an optical prefiltering is carried out in the spatial domain to reduce alias interference before scanning.

9. Method according to one of the preceding claims, characterized in that, in determining the movement information, a corner detection and a systematic speed measurement are carried out on object corners.

10. Method according to one of the preceding claims, characterized in that, in the generation of the movement information, movement vector fields are determined and said movement vector fields are postprocessed by a recursive frequency filtering, the most frequent vector being assigned only if it also yields a good match result.

11. Method according to one of the preceding claims, characterized in that, in the spatial domains of constant brightness within a moving object in which the zero vector has been assigned accordingly, the vector fields are postprocessed in such a way that the zero vector is replaced by adjacent displacement vectors which are not equal to the zero vector if the replacement vector also yields a good match result.

12. Method according to one of the preceding claims, characterized in that the movement information generated is used in a chroma key mixer as an additional determination criterion for the segmentation in the foreground object and stationary background in order to prevent the incorrect fading-in of the background picture in regions of the foreground object at those points in which the colour of the foreground object is similar to the key colour.

13. Camera for the recording of moving pictures for a movement-information-aided signal processing of movements of objects to be imaged using picture recording sensors (2) as picture content sensors (2), characterized by at least one further picture recording sensor (3) as movement sensor (3) having an increased picture frame frequency compared with the picture content sensors (2) and having an output signal for determining the movement information.

14. Device for the recording of moving pictures for a movement-information-aided signal processing of movements of objects to be imaged, characterized by at least one further picture recording sensor (3) as movement sensor (3) having an increased picture frame frequency compared with the picture content sensors (2) and having an output signal for determining the movement information.

15. Device according to Claim 14, characterized in that the movement information of the movement sensor (3) is provided for generating sequences for different transmission standards and/or for generating sequences in large-area flicker-free playback standards and/or of slow-motion sequences.

**Revendications**

1. Procédé pour l'enregistrement d'images animées pour un traitement, assisté par une information de déplacement, de signaux de déplacements d'objets dont l'image doit être formée, moyennant l'utilisation de capteurs (2) de prise de vues sous la forme de capteurs (2) de contenu d'images, caractérisé en ce qu'il est prévu au moins un autre capteur (3) de prise de vues, qui est utilisé en tant que capteur de déplacement (3) et comporte, par rapport aux capteurs (2) de contenu d'images une fréquence d'image accrue, et que le signal de sortie de l'autre capteur (3) de prise de vues est utilisé pour la détermination d'une information de déplacement.

2. Procédé selon la revendication 1, caractérisé en ce que le capteur de déplacement (3) possède une définition locale réduite par rapport aux capteurs (2) de contenu d'images.

3. Procédé selon l'une des revendications précédentes, caractérisé en ce que pour la détermination de l'information de déplacement on utilise, en dehors du signal du capteur de déplacement (3), également le signal à haute définition locale des capteurs (2) de contenu d'images, pour réaliser une correction précise.

4. Procédé selon l'une des revendications précédentes, caractérisé en ce qu'on utilise ce procédé dans le cadre d'un procédé hiérarchique de mesure de déplacement, dans lequel on effectue la mesure en plusieurs échelons, établis hiérarchiquement, de définitions locales différentes.

5. Procédé selon l'une des revendications précédentes, caractérisé en ce qu'on prévoit plusieurs capteurs de déplacement (3) pour différentes composantes primaires de couleurs, dont les signaux sont utilisés pour la détermination de l'information de déplacement.

6. Procédé selon l'une des revendications précédentes, caractérisé en ce que la répartition du faisceau de lumière entre des capteurs (2) de contenu d'images et des capteurs de déplacement (3) s'effectue à l'aide d'une réflexion à l'intérieur de l'objectif, et le capteur de déplacement (3) est installé sur ou dans l'objectif.

7. Procédé selon l'une des revendications précédentes, caractérisé en ce que la répartition du faisceau de lumière entre les capteurs (2) de contenu d'images et les capteurs de déplacement (3) s'effectue à l'aide d'un diviseur de faisceau comportant plusieurs sorties optiques, à l'extérieur de l'objectif situé dans la tête de la caméra.

8. Procédé l'une des revendications précédentes, caractérisé en ce que dans le trajet du faisceau optique pour le capteur de déplacement, un filtrage optique préalable est exécuté, avant le balayage, dans la zone locale pour réduire des parasites formés d'images fantômes.

9. Procédé selon l'une des revendications précédentes, caractérisé en ce que, lors de la détermination de l'information de déplacement, une détection de coins et une mesure ciblée de vitesse sont exécutées au niveau de coins de l'objet.

10. Procédé selon l'une des revendications précédentes, caractérisé en ce que, lors de la production de l'information de déplacement, des champs de vecteurs de déplacement sont déterminés et ces champs de vecteurs de déplacement subissent un post-traitement au moyen d'un filtrage récursif de fréquence, le vecteur le plus fréquent étant associé uniquement lorsqu'il fournit un bon résultat de mise en correspondance.

11. Procédé selon l'une des revendications précédentes, caractérisé en ce que dans des zones locales à luminosité constante à l'intérieur d'un objet mobile, auquel le vecteur nul a été associé de façon correspondante, un post-traitement des champs de vecteurs est exécuté de telle sorte que le vecteur nul est remplacé par des vecteurs contigus de déplacement, qui sont différents du vecteur nul, lorsque le vecteur de remplacement fournit également un bon résultat de mise en correspondance.

12. Procédé selon l'une des revendications précédentes, caractérisé en ce que l'information de déplacement produite est utilisée, dans un mélangeur Chromakey en tant que critère supplémentaire de détermination pour la segmentation en l'objet de premier plan et le fond fixe, pour éviter l'insertion incorrecte de l'image du fond dans des zones de l'objet de premier plan, aux emplacements auxquels la couleur de l'objet de premier plan est identique à la couleur de code (Key).

13. Caméra pour un enregistrement d'images animées pour un traitement, assisté par des informations de déplacement, de signaux de déplacements d'objets, dont l'image doit être formée, moyennant l'utilisation de capteurs (2) de prise de vues en tant que capteurs (2) de contenu d'images, caractérisée par au moins un autre capteur (3) de prise de vues utilisé comme capteur de déplacement (3), avec une fréquence d'image accrue par rapport aux capteurs (2) de contenu d'images et un signal de sortie pour la détermination des informations de déplacement.

14. Dispositif d'enregistrement d'images animées pour un traitement, assisté par des informations de déplacement, de signaux de déplacements d'objets, dont l'image doit être formée, moyennant l'utilisation de capteurs (2) de prise de vues en tant que capteurs (2) de contenu d'images, caractérisée par au moins un autre capteur (3) de prise de vues utilisé comme capteur de déplacement (3), avec une fréquence d'image accrue par rapport aux capteurs (2) de contenu d'images et un signal de sortie pour la détermination des informations de déplacement.

15. Dispositif selon la revendication 14, caractérisé en ce que l'information de déplacement du capteur de déplacement (3) est prévue pour la production de séquences pour différents standards de transmission et/ou pour la production de séquences dans des normes de reproduction sans papillotement sur une surface étendue et/ou de séquences de prises de vues au ralenti.

FIGUR 1

FIGUR 3

a.

b.

200 Hz
100 Hz
50 Hz
25 Hz

FIGUR 2

Bildaufnahme

Progr. Abtastung

1250 Z 25 Hz — 1

625 Z 100 Hz — 3

4

MUX

35 mm Film

bewegungsgesteuerte Rauschreduktion

Bewegtbildbeschreibung
mit
1250Z/25Hz/1:1—Bildern
und
Bewegungsinformation

bewegungs—

gesteuerter    Interpolator

1250/50/2:1
1250/50/1:1
1050/59,94/2:1
1125/60/2:1
...

verb. PAL (inkl. DATV)
D2—MAC
HD—MAC inkl. DATV
Dig. Coder inkl.
Bew.—info.

verbesserte
Zeitlupen—
sequenzen

verbesserte
Bildraten—
aufwärtskonversion
z.B. f. 100Hz—Seq.

FIGUR 4

Bewegungssensor
opt. Tiefpass
B-Sensor
G-Sensor
R-Sensor
Iris
Teilerprisma

FIGUR 5

Bewegungssensor

Vorfilter

blau reflektierender
Spiegel

R-Sensor

G-Sensor

teildurchlässiger
Spiegel
(MI/PI—Teiler)

rot reflektierender
Spiegel

B-Sensor

FIGUR 6

B—Sensor

blau reflektierende
Spiegelschicht

teildurchlässige
Spiegelschicht

rot reflektierende
Spiegelschicht

G—Sensor

R—Sensor

Bewegungssensor

Vorfilter